# EUROPEAN PATENT APPLICATION

(11) **EP 4 059 825 A1**
(43) Date of publication of application: **21.09.2022**
(21) Application number: 21163163.5
(22) Date of filing: 17.03.2021
(51) Int. Cl.: B63B 1/38, H01M 8/00, B63H 21/00

(54) **AIR SUPPLY APPARATUS FOR A SHIP, SHIP INCLUDING THE SAME, AND METHOD OF SUPPLYING AIR TO AN AIR LUBRICATION DEVICE**

(71) Applicant: Turbo Systems Switzerland Ltd., 5400 Baden (CH)
(72) Inventor: Tissot, Jean-Francois, 68750 Bergheim (FR); Keinaenen, Jari, 5300 Turgi (CH)
(74) Representative: Zimmermann & Partner Patentanwälte mbB

(57) **Abstract**

An air supply apparatus (100) for a ship is described. The air supply apparatus (100) includes a fuel cell (110) and an air lubrication device (120) for resistance reduction of the ship. An exhaust gas outlet (111) of the fuel cell (110) is connected with the air lubrication device (120) via an exhaust gas line (112) for supplying exhaust gas to the air lubrication device (120). Further, a ship (200) comprising an air supply apparatus (100) according to any embodiments described herein as well as a method of supplying air to an air lubrication device (120) of a ship are described.

## Description

### TECHNICAL FIELD

Embodiments of the present disclosure relate to an air supply apparatus of an air lubrication type ship for reducing water friction resistance. Further, embodiments of the present disclosure relate to a method of supplying air to an air lubrication device of a ship.

### BACKGROUND

Generally, a ship receives friction resistance of water during marine navigation on its submerged surface of the ship's bottom. Especially for large ships, e.g. cargo ships, a large portion of the ship's hull resistance of results from friction resistance generated by relative flow of outside water at the ship's bottom.

To reduce ship's hull friction resistance air lubrication can be used, particularly by discharging air into surroundings of the ship's hull. The reduction of friction resistance has a large fuel economy improving effect, and thus represents effective means to reduce the CO₂ emission of the ship.

In the state of the art, there are various systems and approaches for the production of air bubbles for the hull lubrication. For instance, for the generation of air bubbles for hull lubrication, the prior art teaches usage of separate or dedicated mechanical electrical compressors or blowers.

However, there is a continuous demand for improved methods and systems for hull lubrication, particularly with respect to energy consumption and eco friendliness.

### SUMMARY

In light of the above, an air supply apparatus for a ship, a ship including the air supply apparatus, and a method of supplying air to an air lubrication device of a ship according to the independent claims are provided. Further aspects, advantages, and features are apparent from the dependent claims, the description, and the accompanying drawings.

According to an aspect of the present disclosure, an air supply apparatus for a ship is provided. The air supply apparatus includes a fuel cell and an air lubrication device for resistance reduction of the ship. An exhaust gas outlet of the fuel cell is connected with the air lubrication device via an exhaust gas line for supplying exhaust gas to the air lubrication device.

Accordingly, compared to conventional apparatuses used for air lubrication type ships, the air supply apparatus of the present disclosure is improved with respect to energy consumption and eco friendliness.

According to a further aspect of the present disclosure, a ship including an air supply apparatus according to any embodiments described herein is provided.

According to another aspect of the present disclosure, a method of supplying air to an air lubrication device of a ship is provided. The method includes supplying exhaust gas from a fuel cell to the air lubrication device.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- Fig. 1: shows a schematic view of a ship with an air supply apparatus according to embodiments described herein;
- Fig. 2: shows a schematic view a ship with an air supply apparatus according to further embodiments described herein; and
- Fig. 3a and 3b: show block diagrams for illustrating embodiments of a method of supplying air to an air lubrication device of a ship according to embodiments described herein.

### DETAILED DESCRIPTION OF EMBODIMENTS

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment can apply to a corresponding part or aspect in another embodiment as well.

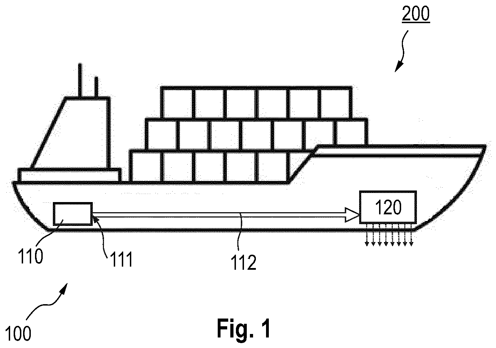

With exemplary reference to Fig. 1, an air supply apparatus 100 for a ship 200 according to the present disclosure is described. According to embodiments, which can be combined with other embodiments described herein, the air supply apparatus 100 includes a fuel cell 110 and an air lubrication device 120 for resistance reduction of the ship 200. In particular, the air lubrication device 120 is configured for air bubble generation for hull lubrication. More specifically, typically the air lubrication device is configured for generating or forming an air layer on a bottom surface of the hull by discharging air to an outer surface below a waterline of the hull. In other words, to reduce ship's hull friction resistance air lubrication can be used, particularly by discharging air into surroundings of the ship's hull, especially under the hull. Accordingly, beneficially frictional resistance between the ship and water can be reduced. As exemplarily indicated in Fig. 1, an exhaust gas outlet 111 of the fuel cell 110 is connected with the air lubrication device 120 via an exhaust gas line 112 for supplying exhaust gas to the air lubrication device 120.

Accordingly, embodiments of the air supply apparatus as described herein, beneficially provide for improved energy efficiency and eco friendliness compared to conventional apparatuses used for air lubrication type ships.

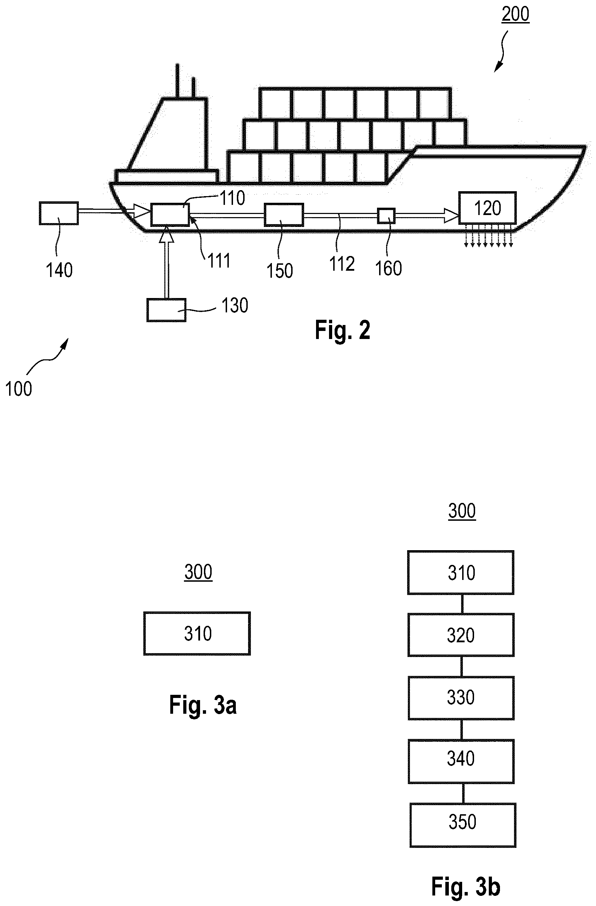

With exemplary reference to Fig. 2, according to embodiments, which can be combined with other embodiments described herein, the fuel cell 110 is connected to a compressor 130 for providing the fuel cell 110 with pressurized air. In other words, the fuel cell 110 can be a pressurized fuel cell which can be beneficial for supplying the air lubrication device with a pressurized flow. Accordingly, the energy efficiency of the ship may be improved. Further, the global carbon footprint of the ship can be reduced.

According to embodiments, which can be combined with other embodiments described herein, the fuel cell 110 is connected to a fuel supply 140, as exemplarily shown in Fig. 2. The fuel supply 140 is configured for providing the fuel cell 110 with fuel. In particular, the fuel can be at least one of hydrogen, methane, methanol, ammonia or any other suitable fuel. Accordingly, compared to conventional fuels used in marine transportation such as heavy oil, eco friendliness can be improved.

With exemplary reference to Fig. 2, according to embodiments, which can be combined with other embodiments described herein, the air supply apparatus 100 further includes at least one component 150 selected from an after burner, an oxidizer, a turbine, an expander, a heat exchanger, a throttle, particularly a flap, and a recirculation device. As exemplarily shown in Fig. 2, typically the at least one component 150 is connected to the exhaust gas line 112. Providing one or more of the further components 150 as described herein may be beneficial for improving the performance of the air supply apparatus, particularly the global system. It is to be understood that each of the at least one component 150 can be arranged in series or parallel.

According to embodiments, which can be combined with other embodiments described herein, the air supply apparatus 100 further includes a flow control device 160 connected to the exhaust gas line 112. In particular, the flow control device can be a valve or a flap. For instance, the flow control device 160 may be provided in series to the at least one component 150, particularly downstream of the at least one component 150. Alternatively, the flow control device 160 can be provided in parallel to the at least one component 150. Accordingly, beneficially the air supply rate to the air lubrication device 120 can be adjusted.

According to embodiments, which can be combined with other embodiments described herein, the fuel cell 110 is a proton exchange membrane fuel cell (PEMFC) or a solid oxide fuel cell (SOFC) or any other fuel cell type, particularly any other fuel cell for mobile applications.

Accordingly, from Figs. 1 and 2 it is to be understood, that according to another aspect of the present disclosure a ship 200 including an air supply apparatus according to any embodiments described herein is provided. Thus, a ship with a more efficient end more ecofriendly system for water-hull friction reduction can be provided, which can reduce the overall operation costs. In the present disclosure, the term "ship" may also include a boat or any other watercraft.

With exemplary reference to the block diagrams shown in Figs. 3a and 3b, embodiments of a method 300 of supplying air to an air lubrication device 120 of a ship 200 according to the present disclosure are described. According to embodiments, which can be combined with other embodiments described herein, the method includes supplying (represented by block 310 in Fig. 3a) exhaust gas from a fuel cell 110 to the air lubrication device 120.

With exemplary reference to Fig. 3b, according to embodiments, which can be combined with other embodiments described herein, the method 300 further includes providing (represented by block 320 in Fig. 3b) the fuel cell 110 with pressurized air.

According to embodiments, which can be combined with other embodiments described herein, the method 300 further includes guiding (represented by block 330 in Fig. 3b) the exhaust gas through at least one component 150 selected from an after burner, an oxidizer, a turbine, an expander, a heat exchanger, a throttle, particularly a flap, and a recirculation device, prior to ejecting the exhaust gas from the air lubrication device 120.

According to embodiments, which can be combined with other embodiments described herein, the method 300 further includes controlling (represented by block 340 in Fig. 3b) the exhaust gas flow provided to the air lubrication device 120 by using a flow control device 160. In particular, the flow control device 160 is a valve or a flap.

It is to be understood that typically the method 300 of supplying air to an air lubrication device 120 of a ship 200 includes using (represented by block 350 in Fig. 3b) the air supply apparatus 100 according to any embodiments described herein. In other words, the method 300 of supplying air to an air lubrication device 120 of a ship 200 can be carried out by employing the supply apparatus 100 according to any embodiments described herein. Further, it is to be understood that the specific combination of method blocks 310, 320, 330, 340 and 350 is only an example. In other words, the method blocks 320, 330, 340 and 350 represent optional additional method features which can be arbitrarily combined with the main block 310 of the method 300. More specifically, supplying (represented by block 310 in Figs. 3a and 3b) exhaust gas from a fuel cell 110 to the air lubrication device 120 can be combined with one or more of the method blocks 320, 330, 340 and 350 as exemplarily described herein.

Hence, in view of the above, it is to be understood that compared to the state of the art, the embodiments described herein beneficially provide for improved energy efficiency and eco friendliness, such that CO₂ emission and operation costs can be reduced.

While the foregoing is directed to embodiments, other and further embodiments may be devised without departing from the basic scope, and the scope is determined by the claims that follow.

### REFERENCE NUMBERS

100 air supply apparatus
110 fuel cell
111 exhaust gas outlet
112 exhaust gas line
120 air lubrication device
140 fuel supply
150 component
160 flow control device
200 ship
300 method of supplying air to an air lubrication device
310, 320, 330, 340, 350 bocks representing method steps of the method of supplying air to an air lubrication device

## Claims

1. An air supply apparatus (100) for a ship (200), comprising:
- a fuel cell (110), and
- an air lubrication device (120) for resistance reduction of the ship (200), wherein an exhaust gas outlet (111) of the fuel cell (110) is connected with the air lubrication device (120) via an exhaust gas line (112) for supplying exhaust gas to the air lubrication device (120).

2. The air supply apparatus (100) of claim 1, wherein the fuel cell (110) is connected to a compressor (130) for providing the fuel cell (110) with pressurized air.

3. The air supply apparatus (100) of claim 1 or 2, wherein the fuel cell (110) is connected to a fuel supply (140) for providing the fuel cell (110) with fuel, particularly the fuel being at least one of hydrogen, methane, methanol, ammonia or any other suitable fuel.

4. The air supply apparatus (100) of any of claims 1 to 3, further comprising at least one component (150) selected from an after burner, an oxidizer, a turbine, an expander, a heat exchanger, a throttle, particularly a flap, and a recirculation device, wherein the at least one component (150) is connected to the exhaust gas line (112).

5. The air supply apparatus (100) of any of claims 1 to 4, further comprising a flow control device (160) connected to the exhaust gas line (112), particularly the flow control device (160) being a valve or a flap.

6. The air supply apparatus (100) of claim 4 and 5, wherein the flow control device (160) is provided in series to the at least one component (150), particularly downstream of the at least one component (150), or wherein the flow control device (160) is provided in parallel to the at least one component (150).

7. The air supply apparatus (100) of any of claims 1 to 6, wherein the fuel cell (110) is a proton exchange membrane fuel cell (PEMFC) or a solid oxide fuel cell (SOFC) or any other fuel cell for mobile applications.

8. A ship (200) comprising an air supply apparatus (100) according to any of claims 1 to 7.

9. A method (300) of supplying air to an air lubrication device (120) of a ship (200), comprising:
- supplying (310) exhaust gas from a fuel cell (110) to the air lubrication device (120).

10. The method (300) of claim 9, further comprising providing (320) the fuel cell (110) with pressurized air.

11. The method (300) of claim 9 or 10, further comprising guiding (330) the exhaust gas through at least one component (150) selected from an after burner, an oxidizer, a turbine, an expander, a heat exchanger, a throttle, particularly a flap, and a recirculation device, prior to ejecting the exhaust gas from the air lubrication device (120).

12. The method (300) of any of claims 9 to 11, further comprising controlling (340) the exhaust gas flow provided to the air lubrication device (120) by using a flow control device (160), particularly a valve or a flap.

13. The method of any of claims 9 to 12, further comprising using (350) an air supply apparatus (100) according to any of claims 1 to 7.
